(19) Europäisches Patentamt
European Patent Office
Office européen des brevets

(11) EP 0 942 264 A2

(12) EUROPÄISCHE PATENTANMELDUNG

(43) Veröffentlichungstag:
15.09.1999 Patentblatt 1999/37

(51) Int. Cl.⁶: G01F 23/284

(21) Anmeldenummer: 99104509.7

(22) Anmeldetag: 06.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 12.03.1998 DE 19810601

(71) Anmelder:
DaimlerChrysler Aerospace AG
81663 München (DE)

(72) Erfinder: Meinel, Holger
89275 Elchingen (DE)

(54) **Anordnung zur Füllstandsmessung**

(57)    Zur Messung der Füllstandshöhe einer Flüssigkeit in einem Tank unter Einsatz einer Mikrowellen-sende-Empfangs-Einrichtung und einem in den Tank reichenden Wellenleiter wird vorgeschlagen, zur präzisen und skalierbaren Meßung der Füllstandshöhe den Wellenleiter so auszubilden, daß er für eine Welle bei der Betriebsfrequenz der Mikrowellen-Einrichtung eindeutige und konstante Wellenausbreitungseigenschaften aufweist. Dies wird insbesondere erreicht durch Dimensionierung des Querschnitts eines Hohlleiters in der Art, daß die Betriebsfreuquenz im Eindeutigkeitsbereich des Hohlleiters liegt.

EP 0 942 264 A2

Printed by Xerox (UK) Business Services
2.16.7/3.6

**Beschreibung**

Die Erfindung betrifft eine Anordnung zu Füllstandsmessung nach dem Oberbegriff des Patentanspruchs 1.

Neben mechanischen Meßmethoden mit Schwimmern sind zur Füllstandsmesung von Flüssigkeiten in Tanks vor allem für große Tankanlagen und für Tankanlagen mit schwimmendem Deckel Anordnungen bekannt, welche mit Abstrahlung von Mikrowellen arbeiten und aus den an der Flüssigkeitsoberfläche reflektierten Echos den Abstand zur Flüssigkeit und daraus die Füllstandshöhe bestimmen. Die Meßgenauigkeit liegt im Millimeter- bis Zentimeter-Bereich.

Aus der US-PS 5,136,299 ist eine derartige Anordnung bekannt, bei welcher ein Mikrowellensender in einem ersten Hohlleiterabschnitt eine Welle anregt, der mittels einer Polarisationsplatte eine bestimmte Polarisationsrichtung des elektrischen Feldvektors aufgezwungen wird. Die polarisierte Welle tritt aus dem ersten Hohlleiterabschnitt über ein Übergangsstück in ein Meßrohr mit wesentlich größerem Durchmesser ein. Das Meßrohr weist entlang einer Mantellinie eine Mehrzahl von Öffnungen auf, durch welche ein Austausch mit der umgebenden Flüssigkeit stattfindet, so daß sichergestellt ist, daß der Füllstand im Meßrohr gleich dem umgebenden Füllstand ist. Das Rohr dient auch als Beruhigungsrohr (stilling well) zum Ausgleich von schnellen Schwankungen der Flüssigkeitsoberfläche.

Das Meßrohr wirkt für die eingekoppelte Mikrowelle als Hohlleiter. Der große Rohrquerschnitt kann für bestimmte Schwingungstypen besonders verlustarme Ausbreitungsbedinggungen bieten, ermöglicht aber die Ausbreitung verschiedener Moden mit u.U. unterschiedlichen Ausbreitungsgeschwindigkeiten. Ferner können je nach angeregtem Schwingungstyp die Öffnungen als Unterbrechungen der Rohrwand die Ausbreitungsbedingungen beeinflussen, so daß trotz vorgesehener Kalibriermarken im Meßrohr die Signalauswertung in der Mikrowelleneinrichtung nicht linear auf die Füllstandshöhe skalierbar ist. Insbesondere können bei der bekannten Anordnung auch die Ausbreitungsbedingungen im Meßbetrieb und im Kalibrierbetrieb verschieden sein.

Der Erfindung liegt daher die Aufgabe zugrunde, eine Anordnung der einleitend genannten Art anzugeben, die bei geringem Aufwand eine genaue und insbesondere skalierbare Füllstandsmessung hoher Präzision ermöglicht.

Die Erfindung ist im Patentanspruch 1 beschrieben.

Die Unteransprüche enthalten vorteilhafte Ausgestaltungen und Weiterbildungen der Erfindung.

Durch die auf die Betriebsfrequenz bezogenen eindeutigen und konstanten Ausbreitungseigenschaften des Wellenleiters kann die Echolaufzeit des Mikrowellensignals eindeutig und linear auf die Füllstandshöhe abgebildet werden. Die Anordnung kann kostengünstig aufgebaut werden, da handelsübliche Radar-Füllstandssensoren ohne Modenadapter eingesetzt werden können.

Der Wellenleiter kann insbesondere als Hohlleiter ausgebildet sein, der vorzugsweise so dimensioniert ist, daß er für einen angeregten Grundmode, insbesondere eine $H_{11}$-Welle in einem Rundhohlleiter oder eine $H_{10}$-Welle in einem Rechteckhohlleiter im Eindeutigkeitsbereich betrieben ist.

Bei einem Hohlleiter sind definierte Wellenausbreitungseigenschaften für Betriebsfrequenzen $f_{op}$ gegeben, die größer sind als eine Ausbreitungs-Grenzfrequenz $f_c$, wobei für einen Rundhohlleiter die Ausbreitungsgrenzwellenlänge $\alpha_c$ durch den Innendurchmesser $d_c$ des Rundhohlleiters zu

$$d_c = \alpha_c = c/f_c \; ; f_c < f_{op}$$

und für einen Rechteckhohlleiter die Ausbreitungs-Grenzwellenlänge $\alpha_c$ durch die doppelte innere Breite a des Hohlleiters zu

$$2a = \alpha_c = c/f_c \; ; f_c < f_{op}$$

gegeben ist.

Die erfindungsgemäße Anordnung kann ähnlich der bekannten Anordnung Strömungsöffnungen für die Flüssigkeit und/oder Kalibriermarken im Verlauf des Hohlleiters aufweisen. Zur Erhaltung der definierten Ausbreitungseigenschaften sind die insbesondere entlang einer Mantellinie des Hohlleiter angeordneten Öffnungen in einer so weit gegen die Polarisationsebene der angeregten Welle verdrehten Ebene durch die Mittelachse des Hohlleiters positioniert, daß ihr Einfluß auf die Ausbreitungsbedingungen möglichst gering ist.

Bei einer Ausführung mit Kalibriermarken im Verlauf des Hohlleiters sind diese vorzugsweise so angeordnet, daß sie für die zur Füllstandsmessung eingestrahlte Welle keine nennungswerte Störung bilden. Für einen Kalibriervorgang wird in an sich bekannter Weise eine Welle mit gegenüber dem Füllstandsmeßvorgang verdrehter Polarisationsebene eingestrahlt, die zu deutlichen Echos durch die Kalibriermarken führt. Die Polarisationebenen zwischen Füllstandsmessung und Kalibriervorgang stehen insbesondere senkrecht aufeinander. Bei einer Ausführungsform mit Kalibriermarken und Strömungsöffnungen liegen die Öffnungen vorzugsweise so, daß die Beeinflussung der Ausbreitungsbedingungen für den Füllstandsmeßvorgang und den Kalibriervorgang gleich groß und möglichst gering ist. Insbesondere können die Öffnungen dabei in einer durch die Hohlleiterlängsachse gehenden Ebene liegen, die gegen die Polarisationsebenen von Füllstandsmessung einerseits und Kalibriervorgang andererseits um gleiche Winkel, beispielsweise 45° verdreht ist.

Bei Ausführung des Wellenleiters als Leckwellenleiter werden gezielt Leistungsanteile der geführten Welle abgestrahlt und die Echos dieser abgestrahlten Anteile mit zur Auswertung herangezogen.

Der Wellenleiter kann von einem größeren Rohr umgeben sein, so daß insbesondere bei bestehenden Anlagen mit einem vorhandenen Beruhigungsrohr großen Durchmessers eine erfindungsgemäße Anordnung nachträglich mit in das Beruhigungsrohr eingesetztem Wellenleiter nachgerüstet werden kann.

Die Erfindung ist nicht auf die beschriebenen Ausführungsbeispiele beschränkt, sondern im Rahmen fachmännischen Könnens in mancherlei Weise abhandelbar.

## Patentansprüche

1. Anordnung zur Füllstandsmessung einer Flüssigkeit in einem Tank mit einer Mikrowellen-Sende-Empfangs-Einrichtung und einem in den Tank reichenden Wellenleiter zur Führung einer eingekoppelten Mikrowelle, dadurch gekennzeichnet, daß der Wellenleiter für eine Welle bei der Betriebsfrequenz eindeutige und konstante Wellenausbreitungseigenschaften aufweist.

2. Anordnung nach Anspruch 1, dadurch gekennzeichnet, daß der Wellenleiter als Leckwellenleiter ausgebildet ist.

3. Anordnung nach Anspruch 1, dadurch gekennzeichnet, daß der Wellenleiter als Hohlleiter ausgebildet ist.

4. Anordnung nach einem der Ansprüche 1 bis 3, dadurch gekennzeichnet, daß der Wellenleiter so dimensioniert ist, daß er für einen angeregten Grundmode im Eindeutigkeitsbereich betrieben ist.

5. Anordnung nach Anspruch 4, dadurch gekennzeichnet, daß der Wellenleiter ein Rundhohlleiter und der angeregte Grundmode eine $H_{11}$-Welle ist.

6. Anordnung nach Anspruch 4, dadurch gekennzeichnet, daß der Wellenleiter ein Rechteckhohlleiter und der angeregte Grundmode eine $H_{10}$-Welle ist.

7. Anordnung nach einem der Ansprüche 1 bis 6, dadurch gekennzeichnet, daß im Verlauf des Wellenleiters in für die Wellenausbreitung zur Füllstandsmessung störungsarmer Position eine oder mehrere Kalibriermarken angeordnet sind und daß zur Kalibrierung eine Welle mit verdrehter Polarisationsebene mit hoher Empfindlichkeit für die Kalibriermarken anregbar ist.

8. Anordnung nach einem der Ansprüche 1 bis 7, dadurch gekennzeichnet, daß im Verlauf des Rohres eine Mehrzahl von Strömungsöffnungen für die Flüssigkeit entlang einer oder mehreren Mantellinien des Wellenleiters in dessen Wandung in für die Wellenausbreitung störungsarmer Position eingebracht sind.

9. Anordnung nach Anspruch 8, dadurch gekennzeichnet, daß die Mantellinien so liegen, daß die Wellenausbreitung zur Füllstandsmessung und die Wellenausbreitung zur Kalibrierung im gleichen Maß beeinflußt werden.

10. Anordnung nach Anspruch 9, dadurch gekennzeichnet, daß die Mantellinien in einer Mittelebene zwischen Polarisationsebenen der angeregten Welle für Füllstandsmeßung einerseits und Kalibrierbetriebs andererseits liegen.

11. Anordnung nach einem der Ansprüche 1 bis 10, dadurch gekennzeichnet, daß der Wellenleiter von einem Rohr mindestens doppelten Durchmessers umgeben ist.